# EUROPEAN PATENT SPECIFICATION

(11) **EP 1 585 774 B1**
(45) Date of publication and mention of the grant of the patent: **19.07.2006**
(21) Application number: 04703799.9
(22) Date of filing: 21.01.2004
(51) Int. Cl.: C08F 18/08, C08F 2/30

(54) **AQUEOUS EMULSIONS OF POLYVINYL ESTERS CONTAINING HYDROXYPROPYLGUAR**
HYDROXYPROPYLGUAR ENTHALTENDE WÄSSRIGE EMULSIONEN VON POLYVINYLESTERN
EMULSIONS AQUEUSES D'ESTERS DE POLYVINYLE CONTENANT DE L'HYDROXYPROPYLGUAR

(30) Priority: 24.01.2003 IT VA20030004
(43) Date of publication of application: 19.10.2005
(73) Proprietor: Lamberti Spa, 21041 Albizzate (IT)
(72) Inventor: RINALDI, Cristina, 20136 Milano (IT); BONELLI, Marco, 21049 Tradate (VA) (IT); PELOSI, Mauro, 21052 Busto Arsizio (VA) (IT); PFEIFFER, Ugo, 20149 Milano (IT); LI BASSI, Giuseppe, 21026 Gavirate (VA) (IT)
(86) International application number: PCT/EP2004/050030
(87) International publication number: WO 2004/065433

(56) References cited:
- EP-A- 0 814 140
- PATENT ABSTRACTS OF JAPAN vol. 0061, no. 27 (C-113), 13 July 1982 (1982-07-13) & JP 57 053502 A (LION CORP), 30 March 1982 (1982-03-30)

## Description

The present invention refers to aqueous emulsions of polyvinyl esters containing hydroxypropylguar as protective colloid.

The aqueous emulsions of polyvinyl esters containing hydroxypropylguar are characterised by the fact the they exhibit improved mechanical stability, high stability to freeze and heath, and were found to be particularly useful for the preparation of paints having marked resistance to water.

In the present invention with the expression "polyvinyl esters" we mean both vinyl esters homopolymers, and the copolymers of one or more vinyl ester with one or more ethylenically unsaturated monomers and in particular with: dibutyl maleate, bis(2-ethylhexyl) maleate; ethyl-, methyl-and 2-ethylhexyl- acrylate or methacrylate; acrylic acid and methacrylic acid, the vinyl ester in the copolymer being in an amount greater than 30% by weight referring to the total weight of the monomers.

It is well known that surfactants and protective colloids are used in the commercial manufacture of vinyl polymers in aqueous emulsion; the protective colloids are water soluble polymers and are usually introduced both to stabilise the aqueous emulsion during the polymerisation reaction and to conduct it properly, and to improve the stability and the rheology of the final emulsions.

More specifically, the adequate stability of the aqueous emulsion during the polymerisation reaction is fundamental to obtain a final product having a very little content of coagulum (lumps); this is essential to avoid low yields, long filtration times and subsequent problems during the work-up.

The absence of coagulum is furthermore essential to obtain paints without defects on the surface, and in particular without streaks, dots, micro-craters.

It is generally known that the water resistance of a film deriving from an aqueous emulsion of polyvinyl esters (and, as a consequence, also the water resistance of the corresponding paint) depends on the polymerisation conditions, which are strongly affected by the kind and the amount of the protective colloid.

The protective colloids more commonly used are polyvinyl alcohol and some cellulose derivatives, for instance hydroxethylcellulose and hydroxyethylmethylcellulose (see US 4,845,175 and US 3,819,593).

The research for new protective colloids in the aqueous emulsion polymerisation is still continuing; we cite as an example US 6,475,632 and US 6,025,427.

It is quite difficult to find a new protective colloid that is able to improve some specific technical features of the emulsion or of the film without negatively affecting other technical features which are anyway essential for the industrial use of the product; unfortunately, it very often happens that, while improving a feature, the equilibrium of other characteristics is altered.

It has now surprisingly been found that, by using hydroxypropylguar having degree of molar substitution higher than 1 as protective colloid in the aqueous emulsion polymerisation of vinyl esters, an emulsion is obtained with similar or even better characteristics than the one obtained with the protective colloids normally employed.

This is even more surprising because we preliminarily verified that the use of hydroxypropylguar having degree of molar substitution smaller than 1, does not lead to satisfying results.

In the present text with the expression "aqueous emulsion polymerisation of vinyl esters" we mean both the aqueous emulsion homo-polymerisation of a vinyl ester, and the aqueous emulsion co-polymerisation of one or more vinyl ester (the vinyl ester being are present in the copolymer in an amount greater than 30% by weight referring to the total weight of the monomers) with one or more ethylenically unsaturated monomers, and in paticular with: dibutyl maleate, bis(2-ethylhexyl) maleate; ethyl-, methyl-and 2-ethylhexyl- acrylate or methacrylate; acrylic acid and methacrylic acid.

The utilisable vinyl ester of the present invention are selected from vinyl acetate, vinyl formate, vinyl propionate, vinyl isobutyrrate, vinyl pyvalate, vinyl 2-etylhexanoate, vinyl esters of C₉-C₁₀ branched saturated monocarboxylic acids (such as vinyl versatate), vinyl ester of saturated or unsaturated fatty acids (such as vinyl laurate, vinyl stearate).

In this group, particularly preferred are vinyl acetate and vinyl versatate.

The hydroxypropylguar useful for the realisation of the present invention has a degree of molar substitution (MS) greater than 1, preferably from 1 to 4 and more preferably from 1.5 to 3, and a 2% viscosity ranging from 1,000 to 25,000 mPa*s.

Like for the more common protective colloids, also for the hydroxypropylguar of the invention, the viscosity is to be chosen according to the kind of the desired final product.

In the present text, with the term "viscosity" we mean the Brookfield viscosity of an aqueous solution of the product at the reported concentration (w/w) at 20°C; with the expression "molar substitution" we mean the molar substitution measured by ¹H-NMR.

Preferably, the hydroxypropylguar utilisable for the realisation of the present invention is reticulated with from 0.3 to 1.5% by weight of glyoxal, and more preferably with from 0.4 to 0.8% by weight of glyoxal, the amount of glyoxal being determined by reaction with 2-hydrazono-2,3-dihydro-3-methylbenzothiazole hydrochloride, according to the method described in "Kunststoffe im Lebensmittelverkehr" Ed. Carl Heymanns Verlag KG, 1999, p 228-231.

The reticulated hydroxypropylguar is obtained by treating hydroxypropylguar with from 0.3 to 1.5% by weight of glyoxal; or, advantageously, said hydroxypropylguar is obtained by treating hydroxypropylguar with from 2 to 3% by weight of glyoxal, preferably with from 2.2 to 2.8% by weight of glyoxal, the glyoxal being dissolved in water at pH lower than 6, at room temperature and, subsequently, by a 30-90 minutes long washing step with water at a pH lower than 6, as it is described in the Italian Patent Application IT VA2002A000023.

In particular, it has been found that in the aqueous emulsion polymerisation of vinyl esters, the use of hydroxypropylguar in an amount ranging from 0.3 to 4% by weight, preferably from 1.0 to 3% by weight referring to the total weight of the monomers, enables to obtain the desired average particles dimension, smaller than 1 micron and preferably from 0.1 to 0.7 micron.

The aqueous emulsion polymerisation of vinyl esters is conducted as it is well known to the person skilled in the art by adding one or more initiators of radical polymerisation, preferably at a temperature of 50-90°C.

Preferably, the aqueous emulsions of polyvinyl esters of the present invention are obtained co-polymerising from 65 to 75 parts by weight of vinyl acetate with from 25 to 35 parts by weight of vinyl versatate.

The aqueous emulsions of the present invention revealed to be very useful in the preparation of water-based paints with high water resistance, stable viscosity and improved characteristics of dry- and wet- abrasion.

Example 1.

In a five necked 1.5 liters reaction vessel equipped with stirrer, heating and cooling apparatus, 250 g of water, 5.00 g of Rewopol SB FA 50 (fatty alcohol ether sodium sulfosuccinate, a surfactant commercialised by Goldschmidt AG), 2.5 g of hydroxypropylguar (MS 1.8, viscosity 8,200 mPa*s 20 rpm) reticulated with 0.5% of glyoxal) are charged.

In a pre-mixer apparatus, 243.5 g of water, 3.0 g of Rewopol SB FA 50, 14.5 g of NF ETO 70% (ethoxylated nonylphenol commercialized by Cesalpinia Chemicals SpA), 475 g of vinyl acetate and 4 g of acrylic acid are charged.

The temperature of the reaction vessel is risen to 75°C and the content of the pre-mixer and 0.5 g of potassium persulfate are slowly added during three hours, maintaining the temperature at 75-80°C.

Then, the temperature is maintained at 75°C for two hours.

The reaction vessel is cooled and its content is poured onto a 150 microns filter, thus obtaining an aqueous emulsion of polyvinyl acetate (Emulsion 1), having a viscosity at 20 rpm of 298 mPa*s and a dry fraction of 46.9% (determined with a Mettler HB43 thermobalance, maintaining the temperature for two minutes at 190°C and then at 160°C until a constant weight).

Example 2 (comparative).

In a five necked 1.5 liters reaction vessel equipped with stirrer, heating and cooling apparatus, 250 g of water, 5.00 g of Rewopol SB FA 50 (fatty alcohol ether sodium sulfosuccinate, a surfactant commercialised by Goldschmidt AG), 2.5 g of Cellosize QP100 (hydroxyethylcellulose commercialised by Union Carbide) are charged.

In a pre-mixer apparatus, 243.5 g of water, 3.0 g of Rewopol SB FA 50, 14.5 g of NF ETO 70% (ethoxylated nonylphenol commercialised by Cesalpinia Chemicals SpA), 475 g of vinyl acetate and 4 g of acrylic acid are charged.

The temperature of the reaction vessel is risen to 75°C and the content of the pre-mixer and 0.5 g of potassium persulfate are slowly added during three hours, maintaining the temperature at 75-80°C.

Then, the temperature is maintained at 75°C for two hours.

The reaction vessel is cooled and its content is poured onto a 150 microns filter, thus obtaining an aqueous emulsion of polyvinyl acetate (Emulsion 2), having a viscosity at 20 rpm of 1860 mPa*s and a dry fraction of 48.9% (determined with a.Mettler HB43 thermobalance, maintaining the temperature for two minute at 190°C and then at 160°C until a constant weight).

Testing of the aqueous emulsions.

The aqueous emulsions of polyvinyl acetate of the Examples 1 and 2 are tested as follows:
a. Stability to freeze (Freeze-thaw stability).

200 g of the emulsion are placed in a closed plastic jar and put in the freezer for 24 hours at 0°C; the jar is then stored at room temperature for 8 hours. The cycle is repeated until total coagulation of the emulsion occurred or three cycles are completed.
b. Mechanical Stability.

200 g of the emulsion are put on a Hamilton Beach shake mixer and run for 30 minutes or until coagulation occurred.
c. Heat Stability.

100 g of the emulsion are put in a 200 ml closed plastic jar and stored at 60°C for a week. The samples are then evaluated for gelation and phase separation.
d. Rheology.

The Brookfield viscosity of the emulsion is measured at 5 and 50 rpm and the ratio of the two values obtained is calculated; the optimum value is between 3 and 5.
e. pH.

The pH of the emulsions is measured the day after their preparation using a pH-meter. The optimum value is between 4 and 5.
f. Particle size determination.

The average particles sizes of the polymer of the emulsion is determined with a Coulter N4 90°.

The results of the tests are reported in the following table (Table 1)

**Table 1**

| | a | b | c | d | e | f |
|---|---|---|---|---|---|---|
| Emulsion 1 | 3 cycles | >30 min. | good | 3.1 | 4.5 | 0.4 mm |
| Emulsion 2 | <1 cycle | 2 min. | good | 3.1 | 4.5 | 0.4 mm |

Testing of the films.

The films are prepared by laying 300 mm thick strata of the aqueous emulsions of polyvinyl acetate of the Examples 1 - 2 and allowing them to dry for three days at 23°C in a conditioned room. The water resistance of the films is then evaluated as follows: three samples of the film of each emulsion are weighed and then immersed into water for 4 days.

The average increase of weight is then measured.

The obtained data are reported in the following table (Table 2).

**Table 2**

| | % (average) increase of weight |
|---|---|
| Film from Emulsion 1 | 0.8 |
| Film from Emulsion 2 | 1.5 |

## Claims

1. Protective colloid for the aqueous emulsion polymerisation of vinyl esters **characterised by** the fact that it consists of hydroxypropylguar having a degree of molar substitution from 1 to 4, and a 2% viscosity ranging from 1,000 to 25,000 mPa*s.

2. Protective colloid for the aqueous emulsion polymerisation of vinyl esters according to claim 1., wherein the hydroxypropylguar has a degree of molar substitution from 1.5 to 3.

3. Protective colloid for the aqueous emulsion polymerisation of vinyl esters according to claim 1. or 2., wherein the hydroxypropylguar is reticulated with from 0.3 to 1.5% by weight of glyoxal.

4. Protective colloid for the aqueous emulsion polymerisation of vinyl esters according to claim 3., wherein the hydroxypropylguar is reticulated with from 0.4 to 0.8% by weight of glyoxal.

5. Protective colloid for the aqueous emulsion polymerisation of vinyl esters according to claim 3. or 4., wherein the reticulated hydroxypropylguar is obtained by treating hydroxypropylguar with from 2 to 3% by weight of glyoxal.

6. Protective colloid for the aqueous emulsion polymerisation of vinyl esters according to claim 5., wherein the reticulated hydroxypropylguar is obtained by treating hydroxypropylguar with from 2.2 to 2.8% by weight of glyoxal.

7. Protective colloid for the aqueous emulsion polymerisation of vinyl esters according to claim 5. or 6., wherein the treatment takes place at room temperature with glyoxal dissolved in water at pH lower than 6 and with a subsequent 30-90 minutes long washing step with water at pH lower than 6.

8. Aqueous emulsion of polyvinyl esters containing from 0.3 to 4 % by weight of hydroxypropylguar, the percentage being referred to the weight of polyvinyl ester.

9. Aqueous emulsion of polyvinyl esters containing from 1 to 3 % by weight of hydroxypropylguar, the percentage being referred to the weight of polyvinyl ester.

10. Aqueous emulsion of polyvinyl esters according to claim 8. or 9., **characterised by** the fact that said polyvinyl esters are obtained co-polymerising from 65 to 75 parts by weight of vinyl acetate with from 25 to 35 parts by weight of vinyl versatate.

## Patentansprüche

1. Schutzkolloid für die wässrige Emulsionspolymerisierung von Vinylester, **dadurch gekennzeichnet, dass** dieses aus Hydroxypropyl-Guar mit einem molaren Substitutionsgrad zwischen 1 und 4 und einer 2%igen Viskosität zwischen 1,000 und 25,000 mPas besteht.

2. Schutzkolloid für die wässrige Emulsionspolymerisierung von Vinylester entsprechend Patentanspruch 1., worin das Hydroxypropyl-Guar einen molaren Substitutionsgrad zwischen 1.5 und 3 besitzt.

3. Schutzkolloid für die wässrige Emulsionspolymerisierung von Vinylester entsprechend Patentanspruch 1. oder 2., worin das Hydroxypropyl-Guar mit 0.3 bis 1.5% Gewichtsanteilen Glyoxal retikuliert ist.

4. Schutzkolloid für die wässrige Emulsionspolymerisierung von Vinylester entsprechend Patentanspruch 3., worin das Hydroxypropyl-Guar mit 0.4 bis 0.8% Gewichtsanteilen Glyoxal retikuliert ist.

5. Schutzkolloid für die wässrige Emulsionspolymerisierung von Vinylester entsprechend Patentanspruch 3. oder 4., worin man das retikulierte Hydroxypropyl-Guar durch Behandlung von Hydroxypropyl-Guar mit 2 bis 3% Gewichtsanteilen Glyoxal erhält.

6. Schutzkolloid für die wässrige Emulsionspolymerisierung von Vinylester entsprechend Patentanspruch 5., worin man das retikulierte Hydroxypropyl-Guar durch Behandlung von Hydroxypropyl-Guar mit 2.2 bis 2.8% Gewichtsanteilen Glyoxal erhält.

7. Schutzkolloid für die wässrige Emulsionspolymerisierung von Vinylester entsprechend Patentanspruch 5. oder 6., worin die Behandlung bei Raumtemperatur mit Glyoxal erfolgt, das bei pH unter 6 in Wasser gelöst ist, worauf ein 30-90 Minuten dauernder Waschschritt in Wasser mit pH unter 6 folgt.

8. Wässrige Emulsion von Polyvinylester, der zwischen 0.3 und 4% Gewichtsanteile Hydroxypropyl-Guar enthält, wobei sich der Prozentsatz auf das Gewicht des Polyvinylesters bezieht.

9. Wässrige Emulsion von Polyvinylester, der zwischen 1 und 3% Gewichtsanteile Hydroxypropyl-Guar enthält, wobei sich der Prozentsatz auf das Gewichts des Polyvinylesters bezieht.

10. Wässrige Emulsion von Polyvinylester entsprechend Patentanspruch 8. oder 9., **dadurch gekennzeichnet, dass** man besagte Polyvinylester durch Copolymerisierung von 65 bis 75% Gewichtsanteilen Vinylacetat mit 25 bis 35% Gewichtsanteilen Vinylversatat erhält.

## Revendications

1. Colloïde protecteur pour la polymérisation en émulsion aqueuse d'esters de vinyle, **caractérisé en ce qu'**il est constitué d'un guar hydroxypropylé ayant un degré de substitution molaire allant de 1 à 4 et une viscosité à 2 % variant de 1000 à 25 000 mPa*s.

2. Colloïde protecteur pour la polymérisation en émulsion aqueuse d'esters de vinyle selon la revendication 1, ledit guar hydroxypropylé ayant un degré de substitution molaire allant de 1,5 à 3.

3. Colloïde protecteur pour la polymérisation en émulsion aqueuse d'esters de vinyle selon la revendication 1 ou 2, ledit guar hydroxypropylé étant réticulé au moyen de 0,3 à 1,5 % en poids de glyoxal.

4. Colloïde protecteur pour la polymérisation en émulsion aqueuse d'esters de vinyle selon la revendication 3, ledit guar hydroxypropylé étant réticulé au moyen de 0,4 à 0,8 % en poids de glyoxal.

5. Colloïde protecteur pour la polymérisation en émulsion aqueuse d'esters de vinyle selon la revendication 3 ou 4, ledit guar hydroxypropylé réticulé étant obtenu en traitant le guar hydroxypropylé au moyen de 2 à 3 % en poids de glyoxal.

6. Colloïde protecteur pour la polymérisation en émulsion aqueuse d'esters de vinyle selon la revendication 5, ledit guar hydroxypropylé réticulé étant obtenu en traitant le guar hydroxypropylé au moyen de 2,2 à 2,8 % en poids de glyoxal.

7. Colloïde protecteur pour la polymérisation en émulsion aqueuse d'esters de vinyle selon la revendication 5 ou 6, le traitement se déroulant à température ambiante avec du glyoxal dissous dans de l'eau à un pH inférieur à 6 et étant suivi d'un lavage d'une durée de 30 à 90 minutes à l'aide d'eau de pH inférieur à 6.

8. Emulsion aqueuse d'esters de polyvinyle contenant de 0,3 à 4 % en poids de guar hydroxypropylé, le pourcentage s'entendant par rapport au poids d'ester de polyvinyle.

9. Emulsion aqueuse d'esters de polyvinyle contenant de 1 à 3 % en poids de guar hydroxypropylé, le pourcentage s'entendant par rapport au poids d'ester de polyvinyle.

10. Emulsion aqueuse d'esters de polyvinyle selon la revendication 8 ou 9, **caractérisée en ce qu'**on obtient lesdits esters de polyvinyle en copolymérisant de 65 à 75 parties en poids d'acétate de vinyle avec de 25 à 35 parties en poids de versatate de vinyle.
